## Europäisches Patentamt
## European Patent Office
## Office européen des brevets

(11) Publication number: **0 150 001**

**A2**

(12) # EUROPEAN PATENT APPLICATION

(21) Application number: **85100097.6**

(22) Date of filing: **07.01.85**

(51) Int. Cl.⁴: **H 04 N 1/40**

(30) Priority· **24.01.84 JP 10532/84**

(43) Date of publication of application:
**31.07.85 Bulletin 85 31**

(84) Designated Contracting States:
**DE FR GB**

(71) Applicant: **FUJI PHOTO FILM CO., LTD.**
**210 Nakanuma Minami Ashigara-shi**
**Kanagawa 250-01(JP)**

(72) Inventor: **Mori, Masanori**
**798, Miyanodai Kaisei-Machi**
**Ashigara-Kamigun Kanagawa(JP)**

(74) Representative: **Kador . Klunker . Schmitt-Nilson . Hirsch**
**Corneliusstrasse 15**
**D-8000 München 5(DE)**

(54) **Binary data conversion method.**

(57) In a method of converting a picture signal read out by an image sensor into a binary data, the picture signal is converted into a primary delayed signal through a primary delay circuit and the primary delayed signal is then converted into a secondary converted signal through a secondary delay circuit. The picture signal and the secondary delayed signal are compared and either one of these signals, which has a level smaller than that of the other signal, is selected. The upper and the lower levels of the thus selected signal are limited and the selected signal with the upper and lower limits is utilized as a threshold with respect to the primary signal to convert the picture signal into the binary data.

FIG. 10

THRESHOLD CIRCUIT

## BINARY DATA CONVERSION METHOD

### BACKGROUND OF THE INVENTION

This invention relates to a method for converting a picture signal generated from an image sensor into binary data.

Documents such as letters or drawings are not usually possessed of half tones, so that picture signal obtained by scanning the documents with the image sensor composed of such as a charge coupled device is processed as a digital signal to sufficiently represent a picture information and the processes thereafter are easily to be performed. For the reason described above, there have been proposed several binary data conversion methods in which a threshold is set to the picture signal and the picture signal is then converted into the binary data.

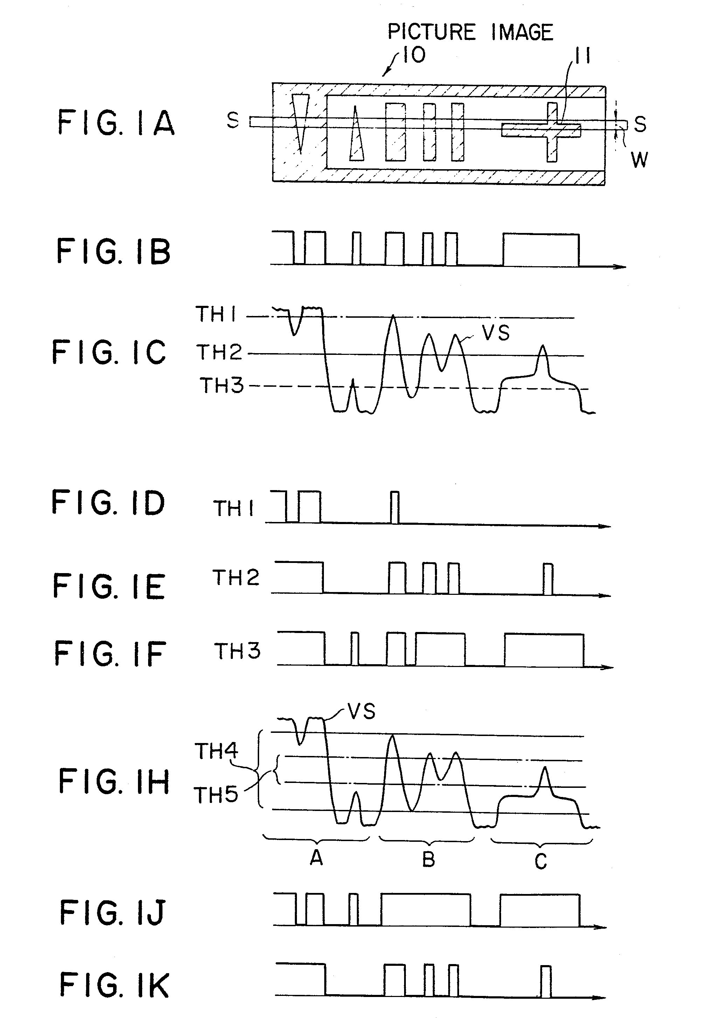

For example, in a case where the scanning S-S is applied to a picture image 10 such as shown in FIG. 1A by the image sensor, an ideal binarily-converted signal of the picture image 10 should be represented by an output wave shown in FIG. 1B. However, an output picture signal VS actually obtained by the image sensor is represented by an output wave as shown in FIG. 1C; that is, the output picture signal VS actually obtained by the image sensor is widely varied because of the delay in response of the image sensor itself and the density variations of the picture image 10 based on the scanning width W. FIGS. 1D, 1E and 1F represent respectively the results converted binarily by setting constant thresholds TH1, TH2 and TH3 to the picture signal VS as shown in FIG. 1C, but these results shown in FIGS. 1D, 1E and 1F are not satisfied as is apparent from the comparison with the correct binary signal shown in FIG. 1B. Furthermore, FIGS. 1J and 1K show the results obtained by binarily converting the same picture signal VS by setting a pair of upper and lower thresholds TH4 and TH5 as shown in FIG. 1H, and as observed in FIGS. 1J and 1H, only the portions A and C of the picture signal VS are correctly binarily-converted by the thresholds TH4 and only the portion B is correctly binarily-converted by the threshold TH5, respectively, thus being not satisfied.

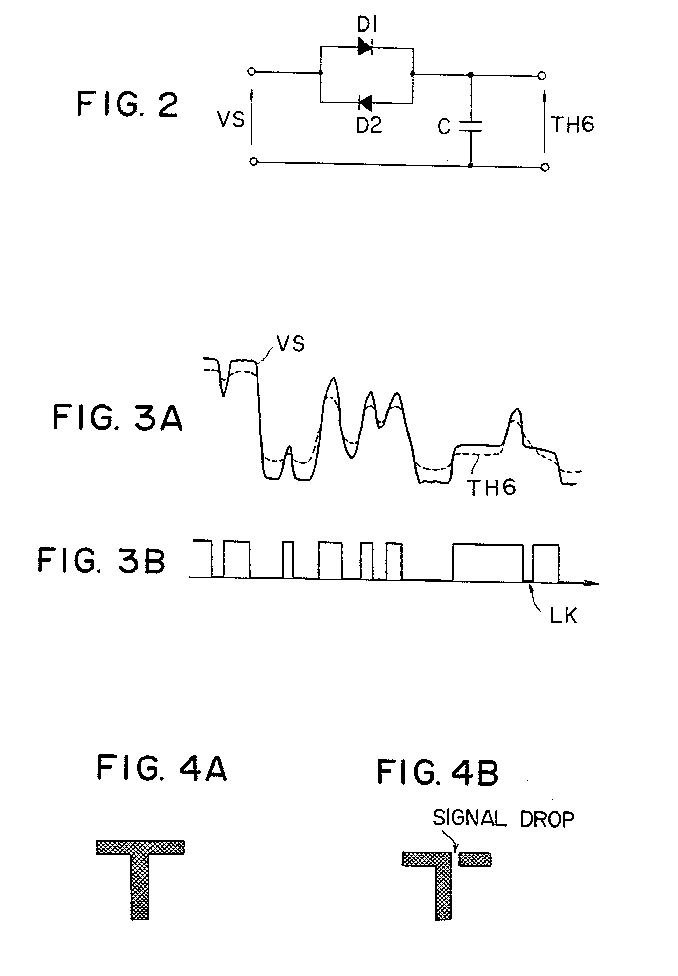

FIG. 2 shows an analogous wave generating circuit consisting of a pair of parallelly connected diodes D1 and D2 and a capacitor C. The picture signal VS as described above is inputted into the analogous wave generating circuit to obtain an analogous signal TH6 which is then used as a threshold signal for converting the picture signal VS into the binary data as shown in FIG. 3A. FIG. 3B shows the result of this binary conversion in which a signal drop LK is observed after the crossing portion provided with high density of the picture image 10. This signal drop LK causes, for example, a correct letter "T" shown in FIG. 4A to be a defective letter shown in FIG. 4B.

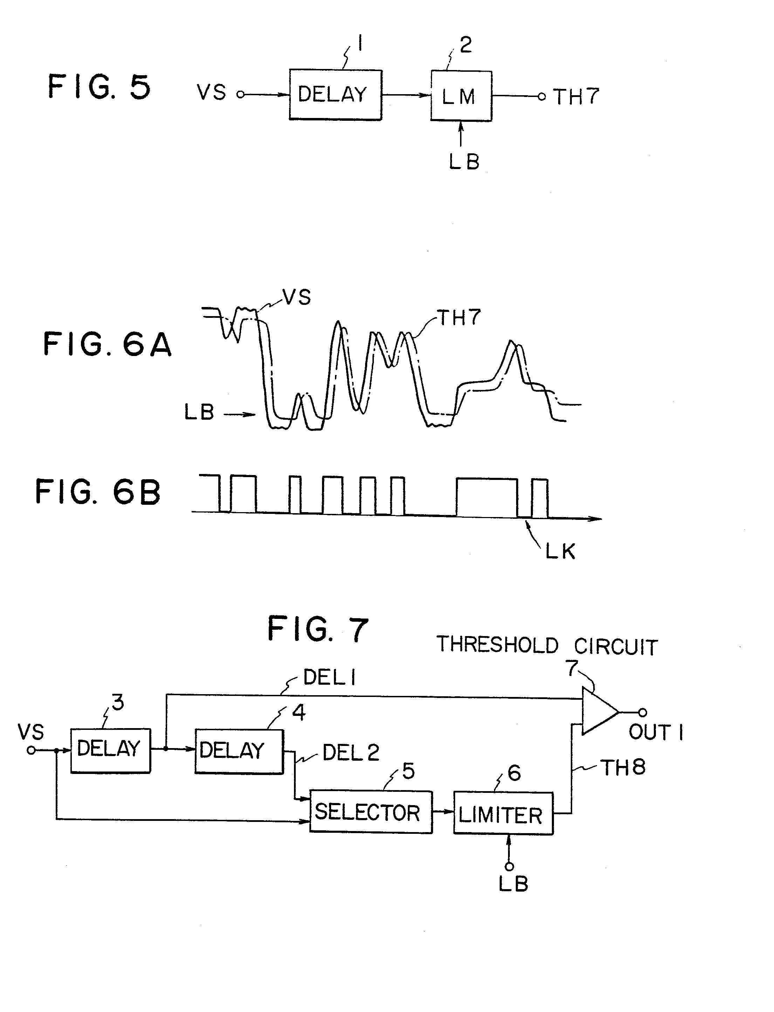

FIG. 5 shows a threshold generating circuit comprising a delay circuit 1 and a lower limiter 2 (lower limit value = LB) and when the picture signal VS is inputted into the threshold generating circuit to generate a threshold signal TH7 which is then used as a threshold signal for converting the picture signal VS into the binary data as shown in FIG. 6A, the result of this binary conversion is represented in FIG. 6B. In this case, the threshold TH7 becomes larger than the picture signal VS after the crossing portion 11 thereof, so that the signal drop LK is also observed as described hereinbefore.

FIG. 7 also shows a circuit diagram for carrying out the binary conversion in accordance with a method of prior art, and in this circuit diagram, the picture signal VS is inputted into a selector 5 as a secondary delayed signal DEL2 through the primary and secondary delay circuits 3 and 4 and is also directly inputted into the selector 5. In the selector 5, either the secondary delayed signal DEL2 or the picture signal VS, which is larger than the other one, is selected, and thereafter, the selected one signal is inputted into the threshold circuit 7 as a threshold TH8 through a lower limiter 6 (lower limit value = LB). In the threshold circuit 7, since the primary delayed signal DEL1 has been preliminarily inputted from the primary delay circuit 3, the threshold circuit 7 then generates a binarily-converted signal OUT1 with respect to the threshold TH8.

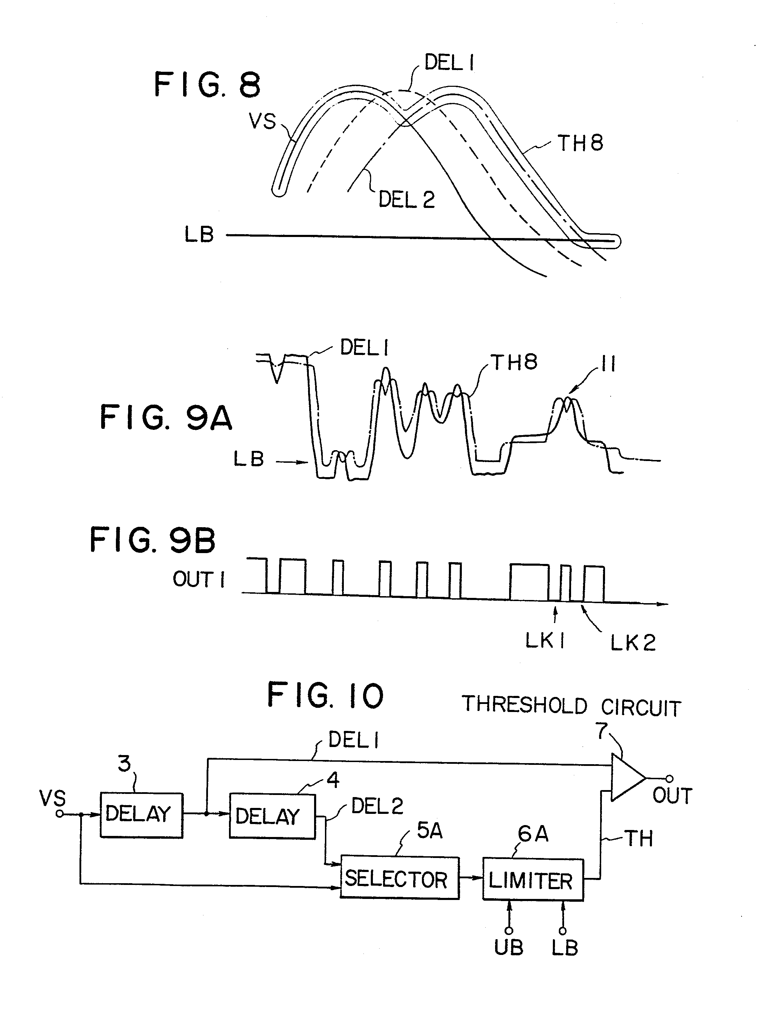

With the circuit arrangement shown in FIG. 7, either the picture signal VS or the secondary delayed signal DEL2, which is larger than the other one, becomes the threshold TH8 of a level larger than the lower limit value LB as shown in FIG. 8. However, in a case where the picture signal VS representing the picture image 10 shown in FIG. 1A is inputted into the binarily-converting circuit and the primary delayed signal DEL1 is binarily converted as shown in FIG. 9A with the threshold TH8, the signal drops LK1 and LK2 are observed in the front and the rear postions of the crossing portion 11 of the picture image.

SUMMARY OF THE INVENTION

An object of this invention is to eliminate defects or problems in a prior art and to provide an improved binary data conversion method capable of correctly binarily-converting a picture signal representing the crossing portion of the picture image with a high density.

For achieving this object, according to this invention, there is provided an improved method for converting a picture signal read out by an image sensor into a binary data and the method is characterized in that the picture signal from the image sensor is converted into a primary delayed signal, the primary delayed signal is then converted into a secondary delayed signal, either the picture signal or the secondary delayed signal, which has a level smaller than that of the other one, is selected, the upper and lower levels of the thus selected signal are limited, and the picture signal is binarily converted by utilizing the this limited signal as a threshold with respect to the primary delayed signal.

According to the binary data conversion method of this invention, the binary conversion of a picture signal, particularly representing the crossing portion of a picture image, can be sufficiently and correctly performed without adversely affecting the binary conversion of the other portions of the picture image in use of a relatively simple circuit means.

The nature, principle and utility of the invention will become more apparent from the following detailed description when read in conjunction with the accompanying drawings.

### BRIEF DESCRIPTION OF THE DRAWINGS

In the accompanying drawings:

FIG. 1A is a schematic view showing one example of a picture image;

FIG. 1B is a view showing a wave form of an ideal binarily-converted signal representing the picture image shown in FIG. 1A;

FIG. 1C is a view showing an actual output signal of an image sensor;

FIGS. 1D through 1F are views showing examples of binarily-converted signal with thresholds TH1, TH2 and TH3 shown in FIG. 1C, respectively;

FIGS. 1H through 1K are views for explaining the binary conversion method in accordance with a pair of upper and lower thresholds;

FIG. 2 is a circuit diagram showing an analogous wave generating circuit;

FIGS. 3A and 3B are views for explaining the binary data conversion method in accordance with the analogous waves;

FIGS. 4A and 4B are views showing examples of a signal drop at the crossing portion of the letter "T";

FIG. 5 is a circuit diagram showing a delayed wave generating circuit;

FIGS. 6A and 6B are views for explaining the binary data conversion method in accordance with the delayed waves;

FIG. 7 is a block diagram showing a conventional circuit for carrying out the binary data conversion method;

FIG. 8 is a view for explaining the operation of the circuit shown in FIG. 7;

FIGS. 9A and 9B are views for explaining the binary data conversion method of the prior art;

FIG. 10 is a block diagram showing the circuit for realizing the binary data conversion method according to this invention;

FIG. 11 is a view for explaining the operation of the circuit shown in FIG. 10; and

FIGS. 12A and 12B are views for explaining the binary data conversion method according to this invention.

## DESCRIPTION OF THE PREFERRED EMBODIMENT

The preferred embodiment according to this invention will be described hereunder in conjunction with FIGS. 10 through 12.

FIG. 10 shows a circuit diagram for carrying out the method of this invention in connection with the circuit diagram shown in FIG. 7. In FIG. 10, picture signal VS from an image sensor is inputted into a delay circuit 3 and also into a selector 5A which selectively outputs a signal having a small signal level. A primary delayed signal DEL1 which is delayed for a predetermined time by the delay circuit 3 or delayed by predetermined picture elements of the image sensor by the picture signal VS is inputted into another delay circuit 4 and also into a threshold circuit 7. A secondary delayed signal DEL2 which is further delayed from the primary delayed signal DEL2 for a predetermined time by the delay circuit 4 or delayed by predetermined picture elements of the image sensor is inputted into the selector 5A. The selector 5A operates to compare the signal level of the inputted picture signal VS with that of the secondary delayed signal DEL2 and also operates to select one of these signals which has a small signal level, and to input it into an upper-lower limiter 6A. Into the upper-lower limiter 6A are preliminarily inputted from a setting device, not shown, signals representing the upper limit level UB and lower limit level LB, respectively, which are set so as to eliminate background noises of the picture image and unevenness of the sensitivity of the image sensor. The selected output signal from the selector 5A is limited within the level range to be determined by the upper and lower levels UB and LB thereby to obtain a threshold TH which is then inputted into the threshold circuit 7. The primary delayed signal DEL1 is binarily converted into the threshold circuit 7 in accordance with the threshold TH and then outputted as a binary signal OUT.

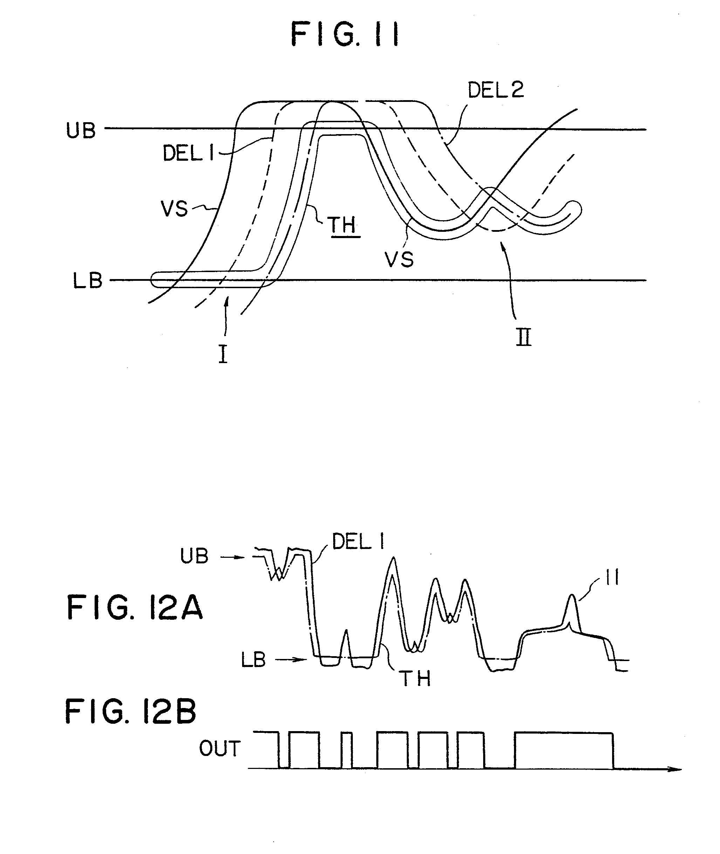

In use of the circuit shown in FIG. 10 with respect to the picture signal VS, for example, shown in FIG. 11, the primary delayed signal DEL1 is shown by dash lines because the signal DEL1 is delayed for a predetermined time or by predetermined picture elements of the image sensor, while the secondary delayed signal DEL2 is shown by dot and dash lines because the signal DEL2 is delayed for a further predetermined time or by further predetermined picture elements of the image sensor. With respect to these signals VS and DEL2, the selector 5A selects and outputs the signal having a small signal level, and the high and low level portions of the thus selected signal are limited by the limiter 6A to the upper and lower limit levels UB and LB to thereby exhibit the threshold TH. According to the manner described above, the threshold TH is

7

represented by the signal surrounded by a fine solid line in FIG. 11. As can be understood from one example described above, the threshold TH is positioned in many portions at the level lower than the primary delayed signal DEL1, whereas the threshold TH is positioned at the level higher than the primary delayed signal DEL1 only in the case I where the delayed signal DEL1 exists in an area having a level lower than that of the lower limit level LB or in the case II where the primary delayed signal DEL1 exists in an area in which the signal DEL1 varies from its decreasing state to its increasing state within the ranges of the upper and lower limit levels UB and LB.

Accordingly, the relationship between the primary delayed signal DEL1 and the threshold TH in a case where the picture signal VS as shown in FIG. 1A is, for example, inputted into the circuit shown in FIG. 10 is represented in FIG. 12A, and only in the cases I and II, the threshold TH has a level higher than that of the primary delayed signal DEL1, and in the other cases, the threshold TH has a level lower than that of the signal DEL1 even at the crossing position 11 of the picture image. For the reason mentioned above, the result of the binary conversion of the primary delayed signal DEL1 by means of the threshold TH somewhat tends to have a wide picture as shown in FIG. 12B, but the binary signal can be always correctly outputted. This fact will be understood in comparison with the ideal binarily-converted output shown in FIG. 1B.

As described hereinabove, according to this invention, the binary conversion of a picture signal read out by an image sensor can be correctly performed particularly with respect to the crossing portion of a picture image with no signal drop without adversely affecting the binary conversion of the other portions of the picture image. This binary conversion can be done by a relatively simple circuit means, which involves no cost-up therefor.

It should be understood that many modifications and adaptations of the invention will become apparent to those skilled in the art and it is intended to encompass such obvious modifications and changes in the scope of the claims appended hereto.

WHAT IS CLAIMED IS:

1.      A method of converting a picture signal into a binary data characterized in that the picture signal is converted into a primary delayed signal, said primary signal is then converted into a secondary delayed signal, either said picture signal or said secondary delayed signal, which has a level smaller than that of the other one, is selected, the upper and lower levels of said selected signal are limited, and the picture signal is binarily converted by utilizing the selected and limited signal as a threshold with respect to said primary delayed signal.

2.      The method as claimed in Claim 1 wherein said upper and lower limits are respectively variable.

3.      The method as claimed in Claim 1 or 2 wherein said picture signal is a signal read out by an image sensor.

4.      The method as claimed in any of Claims 1 to 3 wherein said primary and second delayed signals are delayed for a predetermined time, respectively.

5.      The method as claimed in Claim 3 or 4 wherein said primary and second delayed signals are delayed by predetermined picture elements of said image sensor, respectively.

6.      The method as claimed in any of claims 3 to 5 wherein said image sensor comprises a charge coupled device.

0150001

PICTURE IMAGE

FIG. IA

FIG. IB

FIG. IC

TH1
TH2
TH3
VS

FIG. ID   TH1

FIG. IE   TH2

FIG. IF   TH3

VS

FIG. IH

TH4
TH5

A   B   C

FIG. IJ

FIG. IK

FIG. 2

VS

D1

D2

C

TH6

FIG. 3A

VS

TH6

FIG. 3B

LK

FIG. 4A

FIG. 4B

SIGNAL DROP

FIG. 5

VS ○—→ | DELAY | 1 —→ | L M | 2 —○ TH7

LB

FIG. 6A

VS

TH7

LB →

FIG. 6B

LK

FIG. 7

THRESHOLD CIRCUIT

DEL1

VS ○— | DELAY | 3 —→ | DELAY | 4

DEL2

| SELECTOR | 5 → | LIMITER | 6

LB

7 —○ OUT1

TH8

FIG. 8

FIG. 9A

FIG. 9B

FIG. 10   THRESHOLD CIRCUIT

0150001

# FIG. 11

# FIG. 12A

# FIG. 12B